# EUROPÄISCHE PATENTSCHRIFT

(11) **EP 2 514 533 B1**
(45) Veröffentlichungstag und Bekanntmachung des Hinweises auf die Patenterteilung: **09.04.2014**
(21) Anmeldenummer: 12002666.1
(22) Anmeldetag: 17.04.2012
(51) Int. Cl.: B08B 1/04, F24J 2/46, B08B 1/00

(54) **Selbstfahrendes Reinigungsgerät zum Reinigen von Solarmodulen**
Self-propelled cleaning device for cleaning solar modules
Appareil de nettoyage autotracté destiné au nettoyage de modules solaires

(30) Priorität: 23.04.2011 DE 202011005524 U
(43) Veröffentlichungstag der Anmeldung: 24.10.2012
(73) Patentinhaber: Staudinger GmbH, 87730 Bad Grönenbach (DE)
(72) Erfinder: Staudinger, Hermann, 87730 Bad Grönenbach (DE); Friedl, Joachim, 87761 Lauben (DE)

(56) Entgegenhaltungen:
- EP-A1- 0 505 956
- DE-A1- 3 540 432
- DE-A1- 19 649 748
- US-A- 5 561 883
- US-A1- 2004 231 089
- US-A1- 2008 216 869

## Beschreibung

Die Erfindung betrifft ein selbstfahrendes Reinigungsgerät, geeignet zum Reinigen der zur Sonne gerichteten Oberflächen von Solarmodulen, mit einer mit motorisch angetriebenen Endlosketten ausgestatteten Fahrvorrichtung, wobei die Endlosketten elastische Laufelemente aufweisen, welche in wechselnder Folge zum Anliegen an der Oberfläche der Solarmodule bestimmt sind, mit wenigstens einer an der Fahrvorrichtung vorgesehenen Reinigungseinrichtung und mit wenigstens einer luftführenden und motorisch angetriebenen Ansaugvorrichtung, die mit einem durch Wandabschnitte und durch einen Rücken der Fahrvorrichtung sowie durch die Oberfläche der Solarmodule gebildeten Raumbereich in Verbindung steht und wobei bei wirksamer Ansaugvorrichtung innerhalb des Raumbereiches ein Luftdruck gebildet ist, der niedriger ist als der außerhalb des Raumbereiches herrschende Luftdruck.

Ein selbstfahrendes Reinigungsgerät, das zum Reinigen von Solarmodulen bestimmt ist, wird zum Beispiel von der deutschen Firma GS-Tec 98553 Hinternah angeboten. Dieses Reinigungsgerät weist eine durch Endlosketten antreibbare Fahrvorrichtung auf. Die mit elastischen und quaderförmig ausgebildeten Laufelementen bestückten Endlosketten verhindern beim Fahren auf den Solarmodulen eine zu große Flächenpressung, die den Solarmodulen schaden könnte und die derart ausgebildeten Endlosketten ermöglichen es, dass das Reingungsgerät auf geneigten, mit Solarmodulen bestückten Dächern einsetzbar ist. Es ist klar, dass es Schwierigkeiten gibt wenn es gilt, ein solches Reinigungsgerät auf sehr steilen Dächern einzusetzen. Auch wenn solche Geräte beispielsweise mit einem Fangseil oder dergleichen zusätzlich gegen Absturz gesichert sind, ist dennoch zu befürchten, dass bei Erreichen einer bestimmten Dachneigung die Laufelemente der Endlosketten auf den Solarmodulen zu rutschen beginnen.

Um das eben erwähnte Rutschen oder gar ein Abstürzen zu vermeiden, wird in der DE 196 49 748 A1 gemäß dem Oberbegriff des Anspruchs 1 eine Halteraupe für eine automatische Reinigungsvorrichtung vorgeschlagen, bei dem das so gestaltete Reinigungsgerät mit wenigstens einer Unterdruckkammer ausgestattet ist, die mit einer in besagter Schrift nicht dargestellten Unterdruckquelle in Verbindung steht. In jedem Laufelement der Endlosketten befindet sich ein Loch, das eine Verbindung zur wenigstens einen Unterdruckkammer herstellt. Die Laufelemente lassen sich mit Hilfe der wenigstens einen Unterdruckkammer so ansteuern, dass diese beim Befahren der Oberfläche von Solarmodulen an diesen festgesaugt sind. Die Halteraupe befindet sich an einer Gondel, die alle weiteren, für den Reinigungsvorgang erforderlichen Komponenten aufweist.

Die US 2004/0231089 A1 beschreibt einen zum Reinigen von Entlüftungskaminen bestimmten Reinigungsroboter. Dieser Roboter weist einen Raum zur Bildung einer Unterdruckkammer auf, die mit einer Unterdruckquelle in Verbindung steht. Eine Schlauchleitung führt zu dieser Kammer Die Kammer wird von beweglichen Schürzen begrenzt, die eine Optimierung des in der Kammer sich einstellenden Unterdrucks bewirken sollen. Durch den Unterdruck wird der in den Kaminen angesammelte Schmutz in einen externen Behälter abgesaugt. Welche Neigungen der Reinigungsroboter zu überwinden imstande ist, lässt die genannte Schrift offen.

Durch die DE 35 40 432 A1 wird man über ein Kletterfahrzeug informiert, das sich mit Hilfe von Saugscheiben, die sich an den Endlosketten befinden, an extrem steilen oder sogar senkrechten Wandflächen bewegen kann. Das Kletterfahrzeug weist Unterdruckkammern auf, die mit den Saugscheiben in Verbindung stehen, so dass sich die Saugscheiben ansteuern lassen, um Vakuumzustände an den Saugscheiben zu bilden. Es ist eine Druckluftquelle vorgesehen, die Druckluft über eine Verteilerleitung an die Unterdruckkammern weiterleitet, wobei Luftejektoren dazu dienen, die erwähnten Vakuumzustände entstehen zu lassen. Aus der Schrift erfährt man, dass die Druckluftquelle vom Kletterfahrzeug entfernt angeordnet ist.

Die EP 0 505 956 A1 offenbart einen kletterfähigen, mit Endlosketten ausgestatteten Apparat zur bevorzugten Reinigung von Glasfassaden. Der Apparat wird zum Durchführen des Reinigungsvorganges an senkrechten Seilen vertikalbeweglich aufgehängt und saugt sich, mit Saugnäpfen versehen, an der Glasfassade fest, um Lageveränderungen des Apparates bei Windbelastung und dergleichen auszuschließen. Der Apparat weist keine Unterdruckquelle auf. Vielmehr lassen sich die Vakuumzustände an den Saugnäpfen dadurch erzielen, dass diese auf mechanische Weise und unter Zuhilfenahme einer Kulissenbahn entsprechend angesteuert werden.

Die US 5,561,883A beschreibt einen Reinigungsapparat zum Reinigen von Öltanks und dergleichen. Der Reinigungsapparat lässt sich im Inneren eines Öltanks bewegen, weist jedoch keine Unterdruckquelle auf. Die Reinigungsmittelzufuhr erfolgt von außerhalb. Ein Abpumpen der mit Ölresten und dergleichen versehenen Reinigungsflüssigkeit erfolgt in separate Tanks.

Schließlich beschreibt die US 2008/0216869 A1 ein Reinigungsgerät zum Reinigen von Dachrinnen und Rinnsteinen. Das ebenfalls mit Endlosketten bestückte Gerät ist vorne und hinten mit einer Reinigungsvorrichtung ausgestattet. Das Gerät ist nicht zum Klettern auf geneigten Flächen bestimmt. Eine Unterdruckquelle fehlt, weil diese nicht erforderlich ist.

Bis auf das zuletzt genannte Gerät sind alle anderen beschriebenen Reinigungsgeräte mit Zuleitungen ausgestattet, die für eine Stromzufuhr, für eine Wasser- oder Reinigungsmittelzufuhr und für das Absaugen oder Zuführen von Luft erforderlich sind. Diese Zuleitungen führen vom Reinigungsgerät zu externen Einrichtungen. Es hat sich für den Reinigungsvorgang als hinderlich erwiesen, wenn viele Leitungen zum Reinigungsgerät führen.

Es ist Aufgabe der Erfindung, ein selbstfahrendes Reinigungsgerät der hier vorliegenden Art so weiter zu entwickeln, dass die Absturzgefahr beim Einsatz auf steilen Dächern noch weiter verringert und ein Durchrutschen der Laufelemente der Endlosketten weitgehend ausgeschlossen ist.

Die Lösung der Aufgabe besteht darin, dass die wenigstens eine Ansaugvorrichtung an der Fahrvorrichtung angeordnet ist, dass die Ansaugvorrichtung die Luft ansaugt und wieder ausstößt, dass die Wandabschnitte in Bezug zur Oberfläche der Solarmodule so angeordnet und den Raumbereich abdichtend so gestaltet sind, dass die Luftzufuhr zum Raumbereich erschwert ist und dass durch die dadurch gebildete Sogwirkung das Reinigungsgerät gegen die Oberfläche der Solarmodule gepresst wird.

Die erfindungsgemäße Vorrichtung zeigt, dass das Reinigungsgerät wenigstens eine an der Oberfläche der Solarmodule wirkende, luftführende und motorisch angetriebene Ansaugvorrichtung aufweist und dass die wenigstens eine Ansaugvorrichtung in einem Raumbereich wirksam ist, der nach oben durch einen Rücken und an seinen Seiten durch eine umlaufende Wand oder durch Wandabschnitte begrenzt ist, wobei der Rücken sowie die Wand oder die Wandabschnitte in Bezug zur Oberfläche der Solarmodule so angeordnet und so gestaltet sind, dass bei wirksamer Ansaugvorrichtung innerhalb des Raumbereiches ein Luftdruck gebildet ist, der niedriger ist als der au-βerhalb des Raumbereiches herrschende Luftdruck.

Der entscheidende Vorteil der Erfindung besteht darin, dass bei wirksamer Ansaugvorrichtung durch den sich innerhalb des Raumbereiches einstellenden niedrigeren Luftdrucks eine Druckdifferenz zum außerhalb des Raumbereiches herrschenden höheren Luftdrucks gebildet wird, so dass das Reinigungsgerät zusätzlich gegen die Solarmodule gedrückt wird und dass somit, im Gegensatz zum bisher bekannten Stand der Technik, sowohl die Gefahr eines Absturzes des Reinigungsgerätes von relativ stark geneigten Dächern als auch die Gefahr des Durchrutschens der Laufelemente der Endlosketten noch weiter verringert wird.
Stattet man die elastischen Laufelemente mit einzelnen Noppen aus, die zum Anliegen an die Oberfläche der Solarmodule bestimmt sind und weist jedes Laufelement wenigstens eine elastische Umrandung auf, die gleich hoch oder bevorzugt geringfügig niedriger ist als die Höhe der sich innerhalb der Umrandung befindlichen Noppen, so wird der Anhaftungszustand der Laufelemente bei wirksamer Ansaugvorrichtung in zweckmäßiger Weise noch weiter gesteigert.
Diese Steigerung ist zusätzlich dann garantiert, wenn Stützeinrichtungen vorgesehen sind, die Stützelemente aufweisen, welche gegen die unten liegende Innenseite der Endloskette drücken und dabei jeweils um eine horizontale Achse schwenkbar gelagert sind. Dann nämlich lassen sich beim Befahren der Solarmodule im Zuge des Reinigungsvorganges auch Bodenunebenheiten bewältigen, die etwa durch die leicht überstehenden Rahmen der Solarmodule gebildet sind, wobei nur jene im Bereich der Bodenunebenheiten befindlichen Stützelemente diesen Unebenheiten ausweichen, während alle anderen Stützelemente ihre Laufelemente in bewährter Weise gegen die glatte Oberfläche der Solarmodule drücken.

Die Erfindung wird anhand von Ausführungsbeispielen näher erläutert. Es zeigt
- Fig. 1: das Reinigungsgerät in einer Draufsicht;
- Fig. 2: das gleiche Reinigungsgerät in einer Seitenansicht;
- Fig. 3: eine Schnittdarstellung einer Wand oder eines Wandabschnittes;
- Fig. 4: eine Anordnung von Stützelementen;
- Fig. 5: eine Reinigungseinrichtung in Seitenansicht;
- Fig. 6: die Reinigungseinrichtung in Draufsicht;

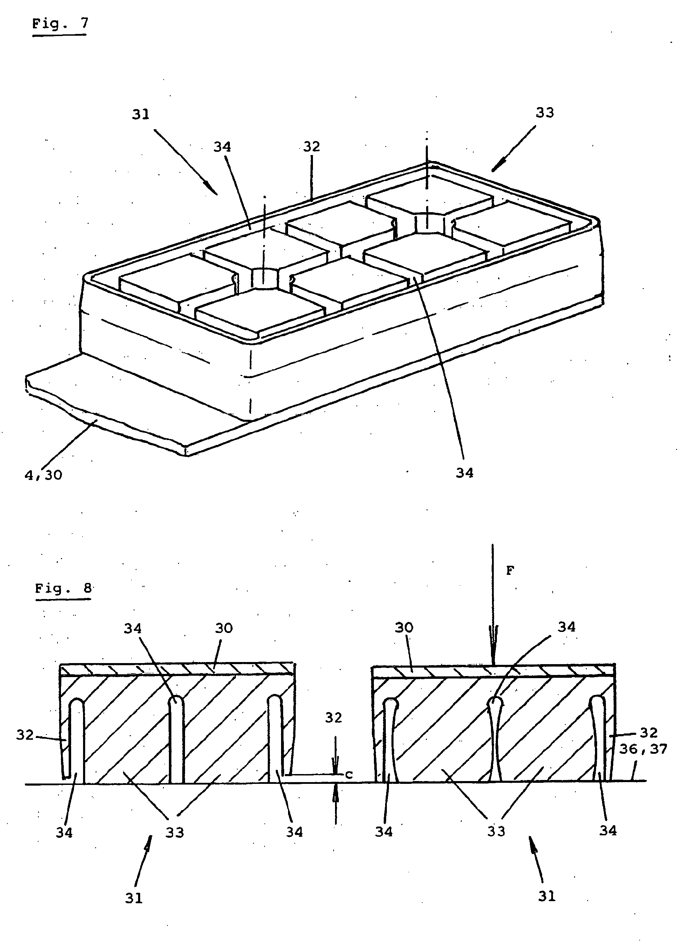

- Fig. 7: ein Laufelement einer Endloskette in Nichtgebrauchslage sowie
- Fig. 8: in vergleichender Weise ein Laufelement in unbelastetem und das gleiche Laufelement in belastetem Zustand.

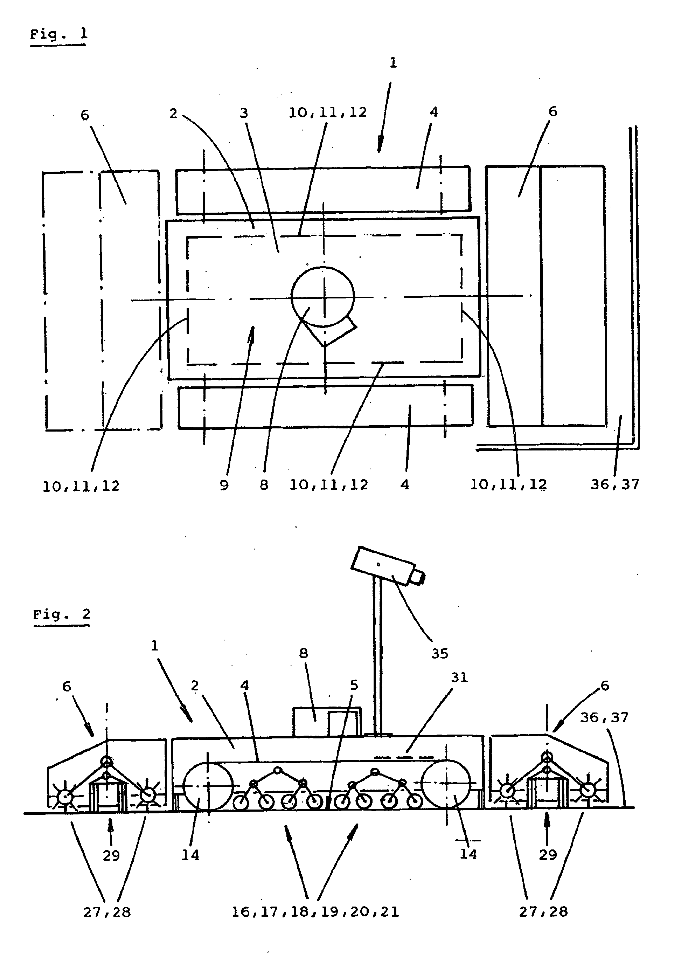

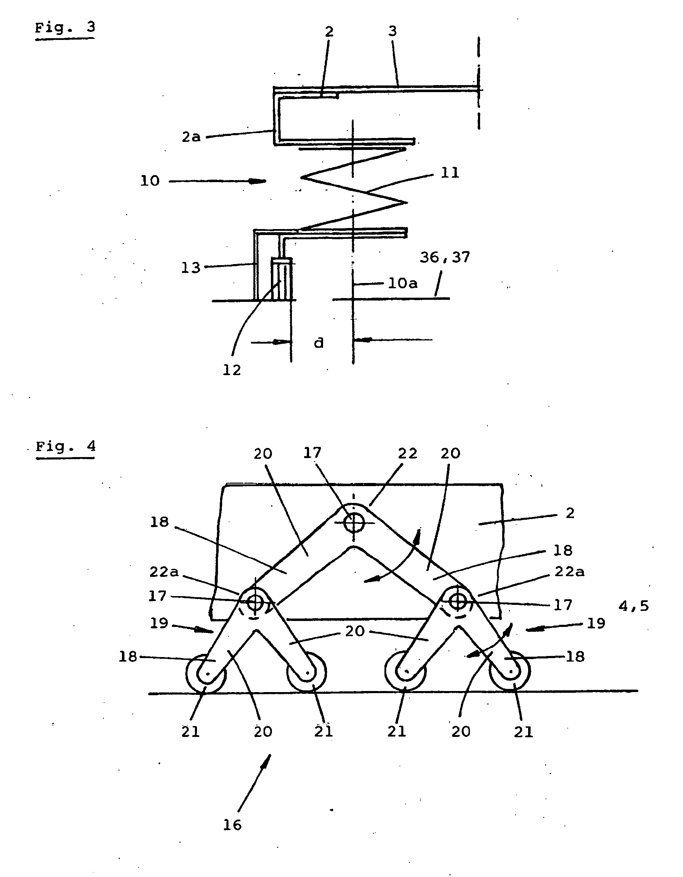

Das in Fig. 1 in Draufsicht dargestellte, zum bevorzugten Einsatz auf geneigt angeordneten Solarmodulen 36 bestimmte Reinigungsgerät 1 weist eine zentral angeordnete Fahrvorrichtung 2 auf, die an zwei sich gegenüber liegenden Seiten mit wenigstens je einer motorisch angetriebenen Endloskette 4, ähnlich wie bei einem Raupenfahrzeug, ausgestattet ist. Das Reinigungsgerät 1 lässt sich somit in bekannter Weise auf den Oberflächen 37 von ebenfalls bekannten Solarmodulen 36 bewegen, ohne dass diese einer großen Flächenpressung ausgesetzt sind. An wenigstens einer der beiden anderen sich gegenüber liegenden Seiten der Fahrvorrichtung 2 ist mindestens eine kraftbetriebene Reinigungseinrichtung 6 vorgesehen, die zur bevorzugten Nassreinigung der zur Sonne gerichteten Oberflächen 37 der Solarmodule 36 bestimmt ist. Die Fahrvorrichtung 2 weist wenigstens eine an der Oberfläche 37 der Solarmodule 36 wirkende, luftführende und motorisch angetriebene Ansaugvorrichtung 8 auf, beispielsweise eine solche mit bekanntem spiralförmigem Aufbau. Die zum Ansaugen und zum anschlie-βenden Ausstoßen von Luft bestimmte Ansaugvorrichtung 8 ist innerhalb eines Raumbereiches 9 wirksam, der nach oben durch einen an der Fahrvorrichtung 2 angeordneten Rücken 3, beispielsweise durch eine geschlossene und abgedichtete Abdeckung und an den Seiten durch eine umlaufende Wand 10 oder durch ebenfalls abgedichtete Wandabschnitte 10 begrenzt ist, wobei der Rücken 3 und die Wand 10 oder die Wandabschnitte 10 in Bezug zur Oberfläche 37 der Solarmodule 36 so angeordnet und so gestaltet ist oder sind, dass bei wirksamer Ansaugvorrichtung 8 innerhalb des Raumbereiches 9 ein Luftdruck gebildet ist, der niedriger ist als der außerhalb des Raumbereiches 9 herrschende Luftdruck. Die von der Ansaugvorrichtung 8 angesaugte Luft wird außerhalb des Raumbereiches 9 wieder ausgestoßen. Die Ansaugvorrichtung 8 kann von oben betrachtet, innerhalb des Grundrisses des Raumbereiches 9 angeordnet sein. Es ist aber auch durchaus möglich, außerhalb des Raumbereiches 9 zwei oder mehr Ansaugvorrichtungen 8 vorzusehen, die mit ihren Ansaugstutzen Zugang zum Raumbereich 9 haben. Das Beispiel soll zeigen, dass beim Reinigungsgerät 1 auch mehr als eine Ansaugvorrichtung 8 Verwendung finden kann. Der Raumbereich 9, ist durch den Rücken 3, durch die umlaufende Wand 10 oder die Wandabschnitte 10 und durch die Oberfläche 37 des jeweils zu reinigenden Solarmoduls 36 gebildet. Im Beispiel ist die umlaufende Wand 10 durch vier rechtwinklig angeordnete Wandabschnitte 10 gebildet, die von oben betrachtet ein Rechteck oder ein Quadrat beschreiben. Die umlaufende Wand 10 kann beispielsweise auch einen kreisförmigen Umriss aufweisen. Die auf geeignete Weise an der Fahrvorrichtung 2 befestigte umlaufende Wand 10 oder die Wandabschnitte 10 ist oder sind im Beispiel in bevorzugter Weise als ein aus elastischem Material gebildeter Faltenbalg 11 gestaltet, der an seinem unteren Rand mit nach unten gerichteten Bürstenleisten 12 ausgestattet ist, die mit ihren freien Borstenenden an der Oberfläche 37 der Solarmodule 36 aufliegen, siehe Fig. 3. Ziel der eben beschriebenen Anordnung von Wand 10 oder Wandabschnitten 10 ist es, die Luftzufuhr zum Raumbereich 9 zu erschweren. Bei wirksamer Ansaugvorrichtung 8 erfolgt deshalb eine Beschleunigung der im Raumbereich 9 befindlichen Luft mit entsprechender Sogwirkung, so dass sich im Raumbereich 9 ein Luftdruck einstellt, der erheblich geringer ist als der Luftdruck außerhalb des Raumbereiches 9. Je geringer die ansaugbare Luftmenge bei gleicher Leistung der Ansaugvorrichtung 8 ist, desto niedriger wird der im Raumbereich 9 herrschende Luftdruck und umso stärker wird das Reinigungsgerät 1, zusammen mit seiner neigungswinkelabhängigen Gewichtskomponente, zusätzlich gegen die Oberfläche 37 der Solarmodule 36 gepresst. Die wenigstens eine Reinigungseinrichtung 6 ist außerhalb des Raumbereiches 9 angeordnet, um die Saugleistung der Ansaugvorrichtung 8 nicht negativ zu beeinträchtigen.

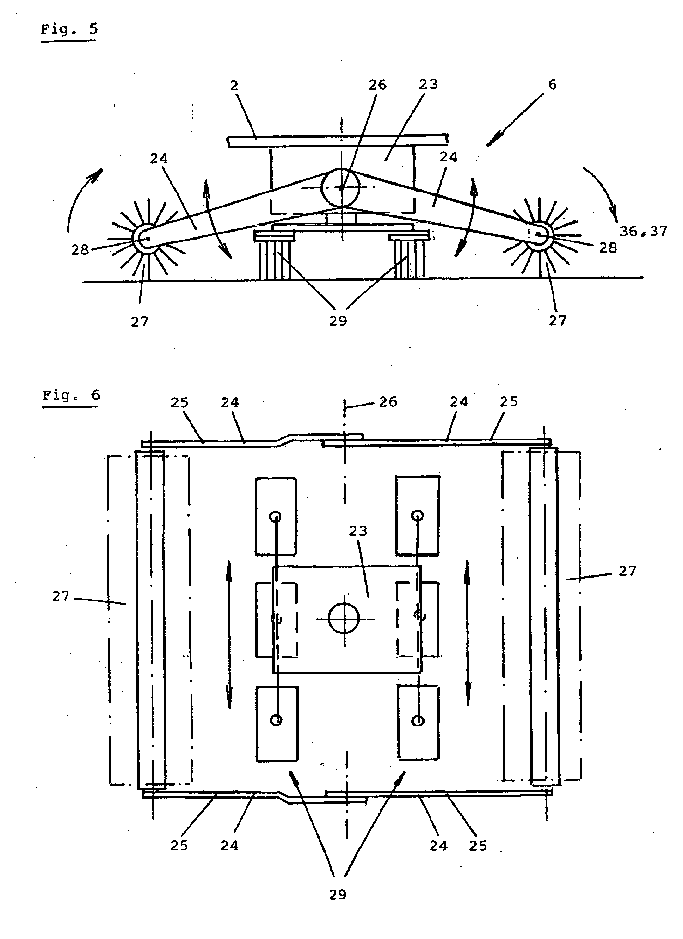

Fig. 2 zeigt das Reinigungsgerät 1 in einer Seitenansicht. An der Fahrvorrichtung 2 sind im Beispiel in bekannter Weise zwei Endlosketten 4 angeordnet, die, wie üblich, durch Antriebsräder 14 bewegbar sind. Man erkennt in der Zeichnung den geschlossenen Umriss der Endlosketten 4. Stellvertretend für sämtliche an den Endlosketten 4 vorgesehenen Laufelemente 31 sind drei dieser Elemente eingezeichnet. Zwischen den Antriebsrädern 14 sind mit Stützelementen 21 ausgestattete Stützeinrichtungen 16 an der Fahrvorrichtung 2 um je eine horizontale Achse 17 bewegbar so angeordnet, dass sich jede Stützeinrichtung 16 wippartig bewegen lässt. An ihren beiden Schenkelenden 18 trägt jede Stützeinrichtung 16 wiederum eine weitere Stützeinrichtung 19. Jede weitere Stützeinrichtung 19 lässt sich ebenfalls um je eine horizontale Achse 17 bewegbar wippartig bewegen. An den Schenkelenden 18 der weiteren Stützeinrichtungen 19 ist jeweils ein Stützelement 21 angeordnet, wobei die Stützelemente 21 gleitschuhartig oder rollenartig ausgebildet sein können, siehe nachfolgende Beschreibung zu Fig. 4. Die weiteren Stützeinrichtungen 19 drücken die Stützelemente 21 gegen die unten liegende Innenseite 5 der Endlosketten 4. An der vorderen Seite und bevorzugt auch an der gegenüberliegenden hinteren Seite der Fahrvorrichtung 2 ist jeweils eine Reinigungseinrichtung 6 vorgesehen. Jede Reinigungseinrichtung 6 ist mit mindestens einer walzenförmigen, jeweils um eine horizontale Achse 28 drehbaren Bürste 27 ausgestattet. Jede Bürste 27 ist motorisch angetrieben. Den walzenförmigen Bürsten 27 sind in einem Abstand linear antreibbare Bürsten 29 zugeordnet, die imstande sind, horizontale Hin- und Herbewegungen auszuführen und die insbesondere dazu bestimmt sind, die durch die Rahmen der Solarmodule 36 gebildeten Eck- und Kantenbereiche der Oberfläche 37 der Solarmodule 36 zu reinigen, siehe auch Fig. 5 und 6. Das Reinigungsgerät 1 trägt eine Kamera 35, die dazu dient, Beschädigungen jedweder Art an den Solarmodulen 36 zu erkennen.

Fig. 3 zeigt in einer Detailansicht und in Schnittdarstellung den Querschnitt einer Wand 10 oder eines Wandabschnittes 10. Der Rücken 3 der Fahrvorrichtung 2 ist als geschlossene Abdeckung ausgebildet. Ein der Fahrvorrichtung 2 angehörender Rahmen 2a trägt beispielsweise diese Abdeckung. Ebenso ist an nach unten weisenden horizontalen Flächen des Rahmens 2a der in Fig. 1 genannte Faltenbalg 11 befestigt, welcher Bestandteil der umlaufenden Wand 10 oder der einzelnen Wandabschnitte 10 ist. Am unteren Rand des Faltenbalges 11 sind die Bürstenleisten 12 angebracht, welche mit ihren freien Borstenenden zum Aufliegen an der Oberfläche 37 der Solarmodule 36 bestimmt sind. Umlaufender Faltenbalg 11 und Bürstenleisten 12 können von außen her durch eine umlaufende Schürze 13 begrenzt oder eingefasst sein. Es hat sich zur Erzielung eines optimalen, im Raumbereich 9 herrschenden Unterdruckes als zweckmäßig erwiesen, die Bürstenleisten 12, und damit deren Borsten, in einem seitlich verlaufenden Abstand d, bezogen auf die senkrechte Mittelachse 10a der Wand 10 oder der Wandabschnitte 10 anzuordnen. Aufgrund der balgartigen, also formveränderbaren Ausbildung der Wand 10 oder der Wandabschnitte 10 kann oder können diese sich unterschiedlichen Höhen anpassen, die sich beim Reinigungsvorgang durch die bekanntlich nach oben etwas abstehenden Rahmen der Solarmodule 36 ergeben. Die Wand 10 oder die Wandabschnitte 10 sind somit höhenvariabel ausgebildet, was bedeutet, dass anstelle eines umlaufenden Faltenbalges 11 durchaus auch andere bekannte höhenvariable, also formveränderbare Ausbildungsformen, etwa ein umlaufender luftgefüllter Schlauch verwendbar sind. Parallel zur umlaufenden Wand 10 oder zu den Wandabschnitten 10 kann eine nicht näher dargestellte zweite umlaufende Wand 10 oder entsprechende Wandabschnitte 10 vorgesehen sein, deren Grundriss größer ist als der Grundriss der vorab beschriebenen Wand 10 oder der Wandabschnitte 10.

Fig. 4 beschreibt eine bevorzugte Ausführungsform einer Stützeinrichtung 16, wie bereits in Fig. 3 angedeutet. Die Zeichnung zeigt einen Teil der Fahrvorrichtung 2. An jeder Längsseite der Fahrvorrichtung 2 sind Lager 22 vorgesehen, die zum wippartigen, also bewegbaren Lagern von Stützeinrichtungen 16 bestimmt sind. Jede der Stützeinrichtungen 16 weist zwei V-förmig angeordnete Schenkel 20 auf, die gegenläufig schräg nach unten weisen. An jedem freien Schenkelende 18 ist wiederum je ein Lager 22a vorgesehen, wobei jedes Lager 22a zur Aufnahme von je einer weiteren Stützeinrichtung 19 bestimmt ist. An den freien Schenkelenden 18 der weiteren Stützeinrichtungen 19 sind Stützelemente 21 angeordnet, die entweder gleitschuhartig oder auch bevorzugt rollenartig und damit drehbar gestaltet sind. Die Schenkel 20 sowohl der Stützeinrichtungen 16 als auch der weiteren Stützeinrichtungen 19 können entweder einteilig oder zweiteilig, also auch körperlich getrennt vorliegen. Sie können ferner, je nach gewählter Ausfiihrung, federbeaufschlagt sein. Beide Lösungen erlauben es, dass beim Überfahren eines höheren Hindernisses, im vorliegenden Falle beispielsweise eines Rahmenteiles eines Solarmoduls 36, die Endlosketten 4 nicht einseitig angehoben werden, sondern dass deren außerhalb des Hindernisses befindlichen Laufelemente 31 weiterhin mit der außerhalb des Hindernisses gelegenen Oberfläche 37 der Solarmodule 36 in Kontakt bleiben. Auf diese Weise wird das Gewicht des Reinigungsgerätes 1 auf den Solarmodulen 36 weiterhin großflächig verteilt und damit eine punktuelle oder linienförmig auf das Hindernis einwirkende hohe Flächenpressung vermieden. Daneben

## Patentansprüche

1. Selbstfahrendes Reinigungsgerät (1), geeignet zum Reinigen der zur Sonne gerichteten Oberflächen (37) von Solarmodulen (36), mit einer mit motorisch angetriebenen Endlosketten (4) ausgestatteten Fahrvorrichtung (2), wobei die Endlosketten (4) elastische Laufelemente (31) aufweisen, welche in wechselnder Folge zum Anliegen an der Oberfläche (37) der Solarmodule (36) bestimmt sind, mit wenigstens einer an der Fahrvorrichtung (2) vorgesehenen Reinigungseinrichtung (6) und mit wenigstens einer luftführenden und motorisch angetriebenen Ansaugvorrichtung (8), die mit einem durch Wandabschnitte (10) und durch einen Rücken (3) der Fahrvorrichtung (2) sowie durch die Oberfläche (37) der Solarmodule (36) gebildeten Raumbereich (9) in Verbindung steht
und wobei bei wirksamer Ansaugvorrichtung (8) innerhalb des Raumbereiches (9) ein Luftdruck gebildet ist, der niedriger ist als der außerhalb des Raumbereiches (9) herrschende Luftdruck, **dadurch gekennzeichnet, dass** die wenigstens eine Ansaugvorrichtung (8) an der Fahrvorrichtung (2) angeordnet ist, dass die Ansaugvorrichtung (8) die Luft ansaugt und anschließend wieder ausstößt, dass die Wandabschnitte (10) in Bezug zur Oberfläche (37) der Solarmodule (36) so angeordnet und den Raumbereich (9) abdichtend so gestaltet sind, dass die Luftzufuhr zum Raumbereich (9) erschwert ist und dass durch die dadurch gebildete Sogwirkung das Reinigungsgerät (1) gegen die Oberfläche (37) der Solarmodule (36) gepresst wird.

2. Reinigungsgerät nach Anspruch 1, **dadurch gekennzeichnet, dass** die Wandabschnitte (10) mit nach unten gerichteten Bürstenleisten (12) ausgestattet sind, die mit ihren Borstenenden zum Aufliegen auf der Oberfläche (37) der Solarmodule (36) bestimmt sind.

3. Reinigungsgerät nach Anspruch 2, **dadurch gekennzeichnet, dass** die Bürstenleisten (12) in einem seitlichen Abstand zur Mittelachse (10a) der Wandabschnitte (10) angeordnet sind.

4. Reinigungsgerät nach Anspruch 2, **dadurch gekennzeichnet, dass** die Bürstenleisten (12) von außen her durch wenigstens eine Schürze (13) abgedeckt sind.

5. Reinigungsgerät nach Anspruch 1 oder 2, **dadurch gekennzeichnet, dass** anstelle von Wandabschnitten (10) eine umlaufende Wand (10) vorgesehen ist.

6. Reinigungsgerät nach Anspruch 1, **dadurch gekennzeichnet, dass** an der Fahrvorrichtung (2) Stützeinrichtungen (16) vorgesehen sind, die weitere, mit Stützelementen (21) ausgestattete Stützeinrichtungen (19) tragen, wobei die Stützeinrichtungen (16) und die weiteren Stützeinrichtungen (19) um horizontale Achsen (17) bewegbar gelagert und die Stützelemente (21) zum Anliegen an die unten liegende Innenseite (5) der Endlosketten (4) bestimmt sind.

7. Reinigungsgerät nach Anspruch 6, **dadurch gekennzeichnet, dass** die Stützelemente (21) gleitschuhartig oder rollenartig ausgebildet sind.

8. Reinigungsgerät nach Anspruch 1, **dadurch gekennzeichnet, dass** in einem Abstand oder zwischen walzenförmigen Bürsten (27) der Reinigungseinrichtung (6) linear antreibbare Bürsten (29) angeordnet sind, die beim Reinigungsvorgang Hin- und Herbewegungen ausführen, welche quer zur Fahrtrichtung des Reinigungsgerätes (1) verlaufen.

9. Reinigungsgerät nach Anspruch 8, **dadurch gekennzeichnet, dass** die linear antreibbaren Bürsten (29) mit harten und mit weichen Borsten ausgestattet sind.

10. Reinigungsgerät nach Anspruch 1, **dadurch gekennzeichnet, dass** die elastischen Laufelemente (31) der Endlosketten (4) mit wenigstens einer Umrandung (32) ausgestattet sind, innerhalb derer sich eine Anzahl Noppen (33) befindet, wobei zwischen den Noppen (33) und der Umrandung (32) einerseits und zwischen den Noppen (33) andererseits Zwischenräume (34) gebildet sind und dass die Noppen (33) in unbelastetem Zustand der Laufelemente (31) entweder gleich hoch sind wie die wenigstens eine Umrandung oder dass die Noppen über die wenigstens eine Umrandung (32) hinausragen.
wird auch zusätzlich eine Beschädigung der Rahmen der Solarmodule 36 verhindert. Beide Lösungen lassen Ausweichbewegungen sowohl der Stützelemente 21 als auch der Laufelemente 31 der Endlosketten 4 im Bereich von zu überfahrenden Hindernissen zu.
In Seitenansicht zeigt Fig. 5 wesentliche Bestandteile der wenigstens einen Reinigungseinrichtung 6. An einem mit der Fahrvorrichtung 2 verbundenen Rahmen 23 sind zwei auf Abstand gehaltene walzenförmige Bürsten 27 um je eine horizontale Achse 28 drehbar angeordnet. Jede walzenförmige Bürste 27 wird von einem am Rahmen 23 vorgesehenen Tragrahmen 24 getragen, wobei jeder Tragrahmen 24 am Rahmen 23 um eine gemeinsame horizontale Achse 26 begrenzt schwenkbar gelagert ist. Diese Art der Lagerung erlaubt es den walzenförmigen Bürsten 27 beim Überfahren eines Hindernisses, beispielsweise eines Rahmens, nach oben auszuweichen. Zwischen den beiden walzenförmigen Bürsten 27 sind am Rahmen 24 linear antreibbare Bürsten 29 bewegbar angeordnet. Über ein Kurbelgetriebe lassen sich die Bürsten 29 in horizontaler Richtung hin- und herbewegen. Die Hin- und Herbewegungen verlaufen quer zur Fahrtrichtung der Reinigungseinrichtung 6. Um Hindernissen wie den Rahmen der Solarmodule 36 ausweichen zu können, sind die linear antreibbaren Bürsten 29 beweglich gelagert. Beweglich bedeutet in diesem Falle, dass die Bürsten 29 nach oben und/oder wippartig den Hindernissen ausweichen können. Die linear antreibbaren Bürsten 29 können aus einem Paket relativ harter und aus einem Paket weicher Borsten gebildet sein. Die harten Borsten stützen die Bürsten 29 auf der Oberfläche 37 der Solarmodule ab.
Fig. 6 zeigt die in Fig. 5 beschriebene Anordnung in einer Draufsicht. Man erkennt die Tragrahmen 24, an deren Schenkeln 25 die walzenförmigen Bürsten 27 drehbar gelagert sind. Erkennbar ist auch die quer zur Fahrtrichtung des Reinigungsgerätes 1 verlaufende horizontale Achse 26, an welchen die Tragrahmen 24 begrenzt schwenkbar gelagert sind. Zwischen den walzenförmigen Bürsten 27 sind die linear antreibbaren Bürsten 29 angeordnet, im Beispiel sind es sechs, wobei der eingezeichnete Doppelpfeil die Hin-und Herbewegung der Bürsten 29 darstellen soll. Die linear antreibbaren Bürsten 29 sind zur Seite hin abgedeckt, um während des Reinigungsvorganges ein Bespritzen benachbarter, bereits gereinigter Solarmodule (36) zu vermeiden.
In räumlicher Darstellung zeigt Fig. 7 eines der elastischen Laufelemente 31, mit welchen die Endlosketten 4 ausgestattet sind. Das Laufelement 31 weist der besseren Darstellung wegen nach oben, es liegt nicht am Boden auf. Alle Laufelemente 31 sind einzeln oder in Gruppen an metallischen Leisten 30 angeordnet, die sich an den Endlosketten 4 befinden. Die Laufelemente 31 sind aus biegeelastischem Material, sie lassen sich stauchen, können ausweichen und kehren bei Nichtbelastung wieder in ihre Ausgangsform zurück. Als biegeelastisches Material empfiehlt sich Gummi. Die Laufelemente 31 weisen bevorzugt einen rechteckigen Umriss auf. Andere einfache geometrische Grundrissformen, etwa eine quadratische oder eine längsovale Form sind durchaus möglich. Die im Beispiel quaderförmig gestalteten Laufelemente 31 weisen mindestens eine lippenartige Umrandung 32 auf, innerhalb derer jeweils eine Anzahl nach oben gerichteter Noppen 33 angeordnet ist. Im Beispiel ist nur eine Umrandung vorgesehen. Zwischen den Noppen 33 und der Umrandung 32 einerseits und zwischen den Noppen 33 untereinander sind Zwischenräume 34 vorgesehen. Die Noppen 33 sind entweder gleich hoch wie die wenigstens eine Umrandung 32 oder bevorzugt geringfügig höher als die wenigstens eine Umrandung 32. Im zuletzt genannten Falle ragen dann die Noppen 33 über die mindestens eine Umrandung 32 hinaus, siehe auch Fig. 8.
In vergleichender Weise zeigt Fig. 8 ein Laufelement 31 einmal in unbelastetem und einmal in belastetem Zustand. Bei beiden Darstellungen liegen die Laufelemente 31 an der Oberfläche 37 eines Solarmodules 36 auf. Sie sind jetzt im Gegensatz zu Fig. 7 um 180° gedreht gezeichnet. Links ist das Laufelement 31 in unbelastetem Zustand dargestellt. Das Laufelement 31 liegt mit seinen Noppen 33 an der Oberfläche 37 auf. In einem geringen Abstand zur Oberfläche 37, etwa 0,2 bis 0,4mm und dargestellt durch das Maß c, verläuft im Beispiel die Umrandung 32. Man erkennt die bereits in Fig. 7 beschriebenen Zwischenräume 34.
Die rechts gezeigte Darstellung zeigt das gleiche Laufelement 31 in belastetem Zustand, in jenem Zustand also, in dem die an den Endlosketten 4 unten liegenden Laufelemente 31 das Gewicht des Reinigungsgerätes 1 auf ein Solarmodul 36 übertragen. Der Pfeil F verdeutlicht die auftretende Gewichtsbelastung. Durch diese Belastung werden die Noppen 33 zumindest so weit gestaucht, dass Umrandung 32 auf der Oberfläche 37 eines Solarmoduls 36 aufliegt. In diesem Zustand wird zwischen den Noppen 33 einerseits und den Noppen 33 und der Umrandung 32 andererseits ein gemeinsamer geschlossener Raum gebildet. Die Nützlichkeit der eben beschriebenen Anordnung von wenigstens einer Umrandung 32 und Noppen 33 macht sich besonders dann bemerkbar, wenn es gilt, Solarmodule 36 nass zu reinigen. Dann nämlich bewegen sich die Laufelemente 31 auf nassem Untergrund mit der Folge, dass die Laufelemente 31 ständig von Wasser umspült sind. Sobald die Laufelemente 31 beim Bewegen der Endlosketten 4 in den belasteten Zustand übergehen, stauchen sich die Noppen 33. Dabei werden die Zwischenräume 34 kleiner und das in den Zwischenräumen 34 befindliche Wasser wird, die wenigstens eine Umrandung 32 passierend, zu einem großen Teil nach außen aus den Laufelementen 31 gepresst, während gleichzeitig die wenigstens eine Umrandung 32 kein weiteres Wasser von außen zurück zwischen die Noppen 33 lässt. Auf diese Weise bleibt die gegenüber der Oberfläche 37 der Solarmodule 36 auftretende Haftkraft der Laufelemente 31 erhalten und ein "Schwimmen" oder eine Art "Aquaplaning" der Laufelemente 31 auf der nassen Oberfläche 37 wird verhindert. Sobald die Belastung der Laufelemente 31 durch weiteres Bewegen der Endlosketten 4 aufgehoben ist, nehmen die Laufelemente 31 wieder jene Form ein, wie links dargestellt.

## Claims

1. Self-propelled cleaning device (1), suitable for cleaning those surfaces (37) of solar modules (36) which are directed towards the sun, with a moving apparatus (2) which is equipped with motor-driven endless chains (4), wherein the endless chains (4) have elastic running elements (31) which are intended for bearing in an alternating sequence against the surface (37) of the solar modules (36), with at least one cleaning means (6) provided on the moving apparatus (2), and with at least one air-guiding and motor-driven suction apparatus (8) which is connected to a space region (9) formed by wall sections (10) and by a back (3) of the moving apparatus (2) and by the surface (37) of the solar modules (36), and wherein, when the suction apparatus (8) is active within the space region (9), an air pressure which is lower than the air pressure prevailing outside the space region (9) is formed, **characterized in that** the at least one suction
apparatus (8) is arranged on the moving apparatus (2), **in that** the suction apparatus (8) sucks up the air and subsequently ejects the air again, **in that** the wall sections (10) are arranged with respect to the surface (37) of the solar modules (36) in such a manner and are designed so as to seal the space region (9) in such a manner that the supply of air to the space region (9) is made difficult, and **in that** the resulting suction effect causes the cleaning device (1) to be pressed against the surface (37) of the solar modules (36).

2. Cleaning device according to Claim 1, **characterized in that** the wall sections (10) are equipped with downwardly directed brush strips (12) which are intended to rest by the bristle ends thereof on the surface (37) of the solar modules (36).

3. Cleaning device according to Claim 2, **characterized in that** the brush strips (12) are arranged at a lateral distance from the centre axis (10a) of the wall sections (10).

4. Cleaning device according to Claim 2, **characterized in that** the brush strips (12) are covered from the outside by at least one cover (13).

5. Cleaning device according to Claim 1 or 2, **characterized in that** a peripheral wall (10) is provided instead of wall sections (10).

6. Cleaning device according to Claim 1, **characterized in that** supporting means (16) which carry further supporting means (19) equipped with supporting elements (21) are provided on the moving apparatus (2), wherein the supporting means (16) and the further supporting means (19) are mounted movably about horizontal axes (17) and the supporting elements (21) are intended to bear against the lower inner side (5) of the endless chains (4).

7. Cleaning device according to Claim 6, **characterized in that** the supporting elements (21) are designed in the manner of sliding shoes or in the manner of rollers.

8. Cleaning device according to Claim 1, **characterized in that** linearly drivable brushes (29) are arranged at a distance from or between cylindrical brushes (27) of the cleaning means (6), said brushes, during the cleaning operation, executing movements to and fro running transversely with respect to the direction of travel of the cleaning device (1).

9. Cleaning device according to Claim 8, **characterized in that** the linearly drivable brushes (29) are equipped with hard and with soft bristles.

10. Cleaning device according to Claim 1, **characterized in that** the elastic running elements (31) of the endless chains (4) are equipped with at least one border (32) within which a number of pimples (33) are located, wherein gaps (34) are formed between the pimples (33) and the border (32), on the one hand, and between the pimples (33), on the other hand, and **in that**, in the unloaded state of the running elements (31), the pimples (33) are either the same height as the at least one border or **in that** the pimples project beyond the at least one border (32).

## Revendications

1. Appareil de nettoyage (1) autotracté, approprié pour le nettoyage des surfaces (37), orientées en direction du soleil, de modules solaires (36), comprenant un dispositif de déplacement (2) équipé de chaînes sans fin (4) entraînées par un moteur, les chaînes sans fin (4) comprenant des éléments de roulement élastiques (31), lesquels sont destinés à s'appliquer en alternance contre la surface (37) des modules solaires (36), comprenant au moins un dispositif de nettoyage (6) prévu sur le dispositif de déplacement (2) et comprenant au moins un dispositif d'aspiration (8) guidant l'air et entraîné par un moteur, lequel dispositif d'aspiration est en liaison avec une région d'espace (9) formée par des sections de paroi (10) et par un dos (3) du dispositif de déplacement (2) ainsi que par la surface (37) des modules solaires (36),
et, lorsque le dispositif d'aspiration (8) est actif, une pression d'air étant produite à l'intérieur de la région d'espace (9), laquelle pression d'air est inférieure à la pression d'air régnant à l'extérieur de la région d'espace (9),
**caractérisé en ce que** l'au moins un dispositif d'aspiration (8) est disposé sur le dispositif de déplacement (2), **en ce que** le dispositif d'aspiration (8) aspire l'air et l'éjecte ensuite à nouveau, **en ce que** les sections de paroi (10) sont disposées par rapport à la surface (37) des modules solaires (36) et la région d'espace (9) est configurée de manière étanche de telle sorte que l'apport d'air jusqu'à la région d'espace (9) soit entravé et de telle sorte que l'appareil de nettoyage (1) soit pressé contre la surface (37) des modules solaires (36) par l'effet de succion ainsi produit.

2. Appareil de nettoyage selon la revendication 1, **caractérisé en ce que** les sections de paroi (10) sont équipées de barrettes de brossage (12) orientées vers le bas, lesquelles sont destinées à s'appuyer sur la surface (37) des modules solaires (36) par leurs extrémités de crins.

3. Appareil de nettoyage selon la revendication 2, **caractérisé en ce que** les barrettes de brossage (12) sont disposées à une distance latérale de l'axe médian (10a) des sections de paroi (10).

4. Appareil de nettoyage selon la revendication 2, **caractérisé en ce que** les barrettes de brossage (12) sont recouvertes, depuis l'extérieur, par au moins une jupe (13).

5. Appareil de nettoyage selon la revendication 1 ou 2, **caractérisé en ce qu'**au lieu de sections de paroi (10), il est prévu une paroi périphérique (10).

6. Appareil de nettoyage selon la revendication 1, **caractérisé en ce que** des dispositifs de support (16) sont prévus sur le dispositif de déplacement (2), lesquels portent des dispositifs de support (19) supplémentaires équipés d'éléments de support (21), les dispositifs de support (16) et les dispositifs de support supplémentaires (19) étant montés mobiles autour d'axes horizontaux (17) et les éléments de support (21) étant destinés à s'appliquer contre le côté intérieur (5) inférieur des chaînes sans fin (4).

7. Appareil de nettoyage selon la revendication 6, **caractérisé en ce que** les éléments de support (21) sont réalisés en forme de patins de glissement ou en forme de galets.

8. Appareil de nettoyage selon la revendication 1, **caractérisé en ce que** des brosses (29) pouvant être entraînées de manière linéaire sont disposées à distance de brosses (27) en forme de rouleaux du dispositif de nettoyage (6), ou entre ces dernières, lesquelles brosses pouvant être entraînées de manière linéaire effectuent lors de l'opération de nettoyage des mouvements de va-et-vient qui s'étendent transversalement par rapport à la direction d'avancement de l'appareil de nettoyage (1).

9. Appareil de nettoyage selon la revendication 8, **caractérisé en ce que** les brosses (29) pouvant être entraînées de manière linéaire sont équipées de crins durs et de crins souples.

10. Appareil de nettoyage selon la revendication 1, **caractérisé en ce que** les éléments de roulement élastiques (31) des chaînes sans fin (4) sont équipés d'au moins une bordure (32) à l'intérieur de laquelle se situent un certain nombre d'ergots (33), des espaces intermédiaires (34) étant formés entre les ergots (33) et la bordure (32) d'une part et entre les ergots (33) d'autre part, et **en ce qu'**à l'état non sollicité des éléments de roulement (31), les ergots (33) sont soit de même hauteur que l'au moins une bordure soit font saillie au-delà de l'au moins une bordure (32).
